# EUROPÄISCHE PATENTSCHRIFT

(11) **EP 0 578 629 B1**
(45) Veröffentlichungstag und Bekanntmachung des Hinweises auf die Patenterteilung: **17.09.1997**
(21) Anmeldenummer: 93890128.7
(22) Anmeldetag: 29.06.1993
(51) Int. Cl.: B01D 53/34

(54) **Verfahren zum Reinigen eines Rauchgasstromes mit Hilfe einer Waschflüssigkeit**
Process for purification of a flue gas stream by a washing liquid
Procédé de purification d'un flux de gaz de fumée à l'aide d'un liquide laveur

(30) Priorität: 09.07.1992 AT 1402/92
(43) Veröffentlichungstag der Anmeldung: 12.01.1994
(73) Patentinhaber: ÖSKO, Österreichische Säurebau- und Korrosionsschutz Gesellschaft mbH, 4053 Ansfelden (AT)
(72) Erfinder: Nemcsek, Rudolf, A-4053 Haid (AT)
(74) Vertreter: Hübscher, Heiner, Dipl.-Ing.

(56) Entgegenhaltungen:
- AT-B- 57 849
- DE-A- 2 928 526
- DE-A- 3 429 956
- DE-A- 3 509 782
- DE-A- 3 614 385

## Beschreibung

Die Erfindung bezieht sich auf ein Verfahren zum Reinigen eines Rauchgasstromes mit Hilfe einer Waschflüssigkeit, die in wenigstens einer Stufe in einem Kreislauf in den heißen Rauchgasstrom eingespritzt, mit dem sich bildenden Kondensat aus dem Rauchgasstrom abgeschieden und dem Rauchgasstrom wieder zugeführt wird, während ein Teil der Flüssigkeit aus dem Flüssigkeitskreislauf ausgeschieden und im Rauchgasstrom vor seiner Naßreinigung verdampft wird.

Zum Reinigen von beispielsweise aus einer Müllverbrennung anfallenden Abgasen werden Rauchgaswäscher in Form von Waschtürmen eingesetzt, die vom Rauchgas von unten nach oben durchströmt werden, während die eingespritzte Waschflüssigkeit den Waschturm im Gegenstrom zur Rauchgasströmung durchsetzt. Die Waschflüssigkeit, üblicherweise Wasser, wird mit dem sich bildenden, die abzuführenden Schadstoffe enthaltenden Kondensat im Unterteil des Waschturmes gesammelt und in einem Kreislauf wieder dem Turmoberteil zugeleitet, so daß sich aufgrund der Kreislaufführung in der Waschflüssigkeit die absorbierten Schadstoffe bzw. deren Reaktionsprodukte sammeln. Zur Einhaltung einer oberen Konzentrationsgrenze für diese absorbierten Stoffe ist folglich ein Teil der Flüssigkeit aus dem Flüssigkeitskreislauf auszuscheiden und durch eine unbelastete bzw. geringer belastete Waschflüssigkeit zu ersetzen.

Der in einer solchen Weise behandelte Rauchgasstrom wird nach einer Tropfenabscheidung gegebenenfalls in einem weiteren Rauchgaswäscher einer zusätzlichen Naßreinigung unterworfen, bevor er abgeblasen wird. Da wegen der Vorreinigung der Rauchgase im vorgeschalteten Waschturm die Waschwasserbelastung in der nachfolgenden Stufe vergleichsweise gering bleibt, kann die aus dem Flüssigkeitskreislauf der ersten Stufe ausgeschiedene Flüssigkeitsmenge durch die ausgeschiedene Flüssigkeit aus dem Flüssigkeitskreislauf der zweiten Stufe ersetzt werden. Nachteilig bei einer solchen ein- oder mehrstufigen Naßreinigung der Rauchgase ist vor allem, daß die aus dem Flüssigkeitskreislauf ausgeschiedene, mit den absorbierten Schadstoffen belastete Flüssigkeit aufwendig entsorgt werden muß. Werden Trockenfilter zur Abgasreinigung eingesetzt, so entfällt zwar die Notwendigkeit einer Waschflüssigkeitsentsorgung, doch können die bekannten Trockenfilter eine Naßreinigung bei höheren Anforderungen an die Rauchgasreinigung nicht ersetzen.

Zur Entstaubung und Entschwefelung von Kesselabgasen ist es bekannt (DE-A-29 28 526), Gaswäscher einzusetzen, wobei die aus dem Flüssigkeitskreislauf des Gaswäschers abgezogene, zu einer Salzlösung aufkonzentrierte Waschflüssigkeit aufoxidiert und dann einem Sprühtrockner zugeführt wird, der mit Hilfe eines Teilstromes der Abgase betrieben wird. Die durch das Verdampfen der Flüssigkeit erhaltenen Salzkristalle werden anschließend in einem Abscheider aus dem Teilgasstrom ausgeschieden, der in den Hauptgasstrom zurückgeführt wird. Die Entstaubung erfolgt in einem Elektrofilter. Die Aufkonzentrierung der Waschflüssigkeit zu einer Salzlösung erfolgt vor allem im Hinblick auf die Gewinnung der getrockneten Salze, beispielsweise Ammoniumsulfat, macht aber dieses Verfahren für die Reinigung der Rauchgase von Müllverbrennungsanlagen ungeeignet.

Um die Abgase von Kesseln insbesondere von Schwefeldioxid zu reinigen ist es darüber hinaus bekannt (DE-A-34 29 956), die aus dem Flüssigkeitskreislauf eines Gaswäschers ausgeschiedene Flüssigkeit dem heißen Rauchgasstrom nach einer Neutralisation in einem Neutralisierungstank wieder zuzuführen und zu verdampfen, wobei ein Abscheider für die allenfalls mit einem Kondensat anfallenden Feststoffe vorgesehen ist. Die aus dem Flüssigkeitskreislauf des Gaswäschers ausgeschiedene, mit Kalkstein oder Löschkalk versetzte Flüssigkeit, die eine Aufschlämmlösung mit aus dem Schwefeldioxid erhaltenem Kalziumsulfit bildet, kann durch Oxidation mit Luftsauerstoff in eine Gipstrübe umgewandelt werden, aus der in einem Fest-Flüssigkeitsabscheider Gips abgeschieden wird, wobei ein Teil des Filtrates zusammen mit einem Teil der Umlaufflüssigkeit der Waschstufe wieder im heißen Abgasstrom aus dem Kessel verdampft wird. Diese bekannte, auf das Entfernen von Schwefeldioxid ausgelegte Abgasreinigung kann jedoch den Anforderungen einer guten Abgasreinigung beispielsweise einer Müllverbrennungsanlage nicht genügen.

Der Erfindung liegt somit die Aufgabe zugrunde, ein Verfahren der eingangs geschilderten Art anzugeben, mit dessen Hilfe in einfacher Weise eine auch hohen Anforderungen genügende Naßreinigung eines Rauchgasstromes ermöglicht wird, ohne eine aufwendige Zwischenbehandlung der aus der Naßreinigung ausgeschiedenen, schadstoffbelasteten Waschflüssigkeit in Kauf nehmen zu müssen.

Die Erfindung löst die gestellte Aufgabe dadurch, daß die aus dem Flüssigkeitskreislauf ausgeschiedene Flüssigkeit dem heißen Rauchgasstrom unmittelbar zugeführt und unter einer Abkühlung des Rauchgasstromes auf eine Temperatur oberhalb des Taupunktes verdampft wird und daß in den Rauchgasstrom ein Adsorptionsmittel eingeblasen wird, bevor der Rauchgsstrom ein der Naßreinigung vorgeschaltetes Trockenfilter durchströmt, in dem die anfallenden Schadstoffe adsorbiert und abgeschieden werden.

Das unmittelbare Zuführen der aus der Naßreinigung ausgeschiedenen, schadstoffbelasteten Waschflüssigkeit zum Rauchgasstrom setzt voraus, daß die dadurch bedingte zusätzliche Belastung der Rauchgase durch die Schadstoffe der Waschflüssigkeit nicht zu einer Vergrößerung des Restschadstoffgehaltes der gereinigten Rauchgase führt. Aus diesem Grund wird ein Großteil der nach dem Verdampfen der Waschflüssigkeit im Rauchgasstrom enthaltenen Schadstoffe in einem der Naßreinigung vorgeschalteten Trockenfilter adsorbiert und trocken abgeschieden. Zu diesem Zweck muß in den Rauchgasstrom ein entsprechendes Adsorptionsmittel eingeblasen werden. Der Einsatz eines solchen Trockenfilters setzt allerdings eine entsprechende Abkühlung der heißen Rauchgase auf eine für das Trockenfilter zulässige Temperatur voraus, was durch die Verdampfung der dem Rauchgasstrom vor dem Trockenfilter zugeführten Waschflüssigkeit erreicht wird. Allenfalls ist eine zusätzliche Kühlung durch Frischwasser notwendig. In jedem Falle ist darauf zu achten, daß die Rauchgastemperatur den Taupunkt nicht unterschreitet, um ein Kondensieren des Dampfes im Bereich des Trockenfilters auszuschließen. Das im Trockenfilter entsprechend vorgereinigte Rauchgas wird anschließend in herkömmlicher Weise einer Naßreinigung in ein oder zwei Stufen unterworfen, wobei es durch ein Einspritzen oder Berieseln mit Waschflüssigkeit unter den Taupunkt abgekühlt wird, um eine Kondensatbildung zu ermöglichen. Der pH-Wert der im Kreislauf geführten Waschflüssigkeit kann durch ein Zumischen einer Lauge, vorzugsweise Natriumlauge, so eingestellt werden, daß die sauren Schadstoffkomponenten, wie Chlorwasserstoff, Fluorwasserstoff oder Schwefeldioxid, vorteilhaft abgeschieden werden.

Ist eine zweistufige Naßreinigung mit Hilfe im Kreislauf geführter Waschflüssigkeit vorgesehen, so wird die aus dem Kreislauf der nachgeordneten Stufe abgezogene Flüssigkeit dem Flüssigkeitskreislauf der vorgeordneten Stufe zugeführt, während die aus dem Flüssigkeitskreislauf der vorgeordneten Stufe abgezogene Flüssigkeit im heißen Rauchgasstrom verdampft wird, weil sich in dieser ersten Stufe eine entsprechend höhere Konzentration an Reaktionsprodukten, wie Natriumchlorid, Natriumfluorid, Natriumhydrogensulfit und Natriumsulfit ergibt.

In den heißen Rauchgasstrom können vor dem Trockenfilter Kalkhydrat und Aktivkohle als Hilfs- bzw. Adsorptionsmittel eingeblasen werden. Das Kalkhydrat verbessert die Abscheideleistung des Filtermittels. Mit Hilfe der Aktivkohle können Dioxine, Furane und Schwermetalle vorteilhaft adsorbiert werden. Die im Trockenfilter in einem Sammelbereich anfallenden, Aktivkohle und Hydrat enthaltenden Feststoffe können teilweise in einem Kreislauf wieder dem Rauchgasstrom aufgegeben werden, um diese Hilfsund Adsorptionsmittel besser ausnützen zu können.

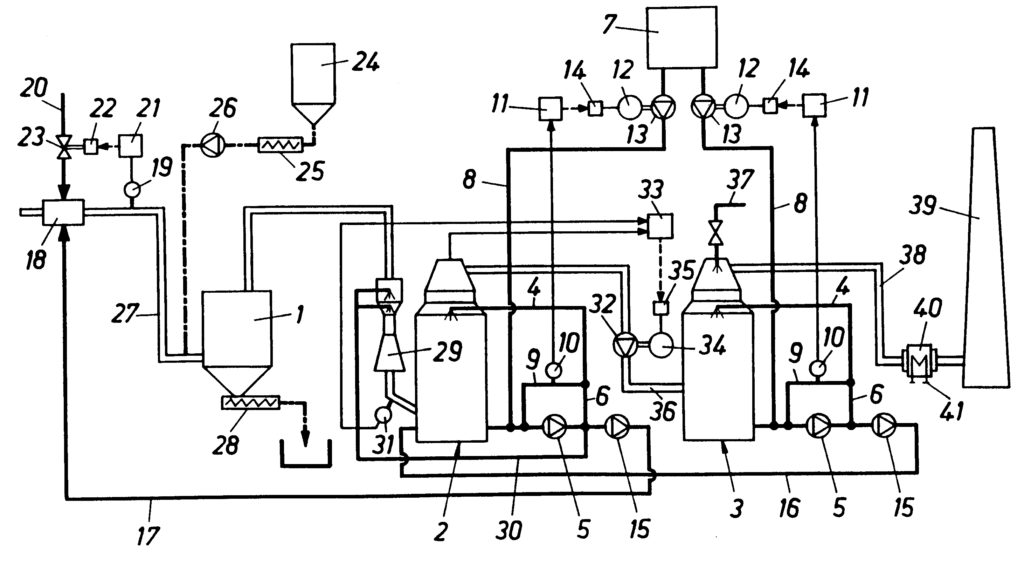

Das erfindungsgemäße Verfahren zum Reinigen eines Rauchgasstromes wird an Hand der Zeichnung näher erläutert, die eine Anlage zum Reinigen eines Rauchgasstromes in einem vereinfachten Blockschaltbild zeigt.

Die dargestellte Anlage zum Reinigen eines Rauchgasstromes besteht im wesentlichen aus der Reihenschaltung eines Trockenfilters 1 und zweier Rauchgaswäscher 2 und 3. Die Rauchgaswäscher 2 und 3, die zwei Stufen einer Naßreinigung des Rauchgasstromes darstellen, sind in Form von zylindrischen Waschtürmen ausgebildet, die in herkömmlicher Weise mit einer von einer Waschflüssigkeit berieselten Gewebepackung und Füllkörperschüttung versehen sind. Die über die Zulaufleitung 4 eingesprühte Waschflüssigkeit wird mit dem sich bildenden Kondensat im unteren Bereich der Waschtürme zur Bildung einer Pumpvorlage gesammelt, die mit Hilfe einer Kreislaufpumpe 5 in einem Flüssigkeitskreislauf 6 der Zulaufleitung 4 zugefördert wird. Diesem Flüssigkeitskreislauf 6 wird aus einem Vorratsbehälter 7 über eine Dosierleitung 8 wässrige Natronlauge zugemischt, um einen für das Abscheiden der sauren Schadstoffkomponenten vorteilhaften pH-Wert von z. B. 8 bis 8,5 einstellen zu können. Zu diesem Zweck wird über eine an den Flüssigkeitskreislauf 6 angeschlossene Zweigleitung 9 der pH-Wert der Kreislaufflüssigkeit mit Hilfe eines entsprechenden Meßwertgebers 10 bestimmt, der an den Istwerteingang einer Regeleinrichtung 11 angeschlossen ist, so daß bei einer auftretenden Soll-Istwertdifferenz der Motor 12 einer Dosierpumpe 13 über ein entsprechendes Stellglied 14 im Sinne eines Soll-Istwertabgleiches angesteuert wird. Sollen nicht nur im Trockenfilter, sondern auch in einer Naßreinigungsstufe Schwermetalle abgeschieden werden, kann der pH-Wert auf einen Wert unter 7 verringert werden. Zum Abscheiden von Stickoxiden kann der pH-Wert über 9 erhöht werden.

Ein Teil der Flüssigkeit aus dem Flüssigkeitskreislauf 6 wird mit Hilfe einer Pumpe 15 abgepumpt, die die ausgeschiedene Waschflüssigkeit im Falle des Rauchgaswäschers 3 über die Leitung 16 dem Rauchgaswäscher 2 zuführt, während die aus dem Flüssigkeitskreislauf 6 des Rauchgaswäschers 2 ausgeschiedene Waschflüssigkeit über die Förderleitung 17 dem Rauchgasstrom in einer Mischkammer 18 zugefördert wird, um das Rauchgas vor dem Eintritt in das Trockenfilter 1 auf eine für das Trockenfilter 1 zulässige Temperatur oberhalb des Taupunktes abzukühlen. Nach dem Zuführen der Waschflüssigkeit über die Leitung 17 wird die Rauchgastemperatur mit Hilfe eines Temperaturfühlers 19 überwacht, damit vor einer Überschreitung der zulässigen Höchsttemperatur für das Trockenfilter 1 der Mischkammer 18 zusätzlich Kühlwasser über die Frischwasserleitung 20 zugeführt werden kann. Mit Hilfe einer entsprechenden Regeleinrichtung 21 kann das Stellglied 22 eines Zulaufventiles 23 in der Frischwasserleitung 20 entsprechend angesteuert werden.

Vor dem Eintritt in das Trockenfilter 1 wird in den Rauchgasstrom Kalkhydrat und Aktivkohle eingeblasen, welche Mittel einem Vorratsbehälter 24 über eine Dosierschnecke 25 entnommen und über ein Gebläse 26 in die Rauchgasleitung 27 gefördert werden. Das Kalkhydrat dieses Gemisches verbessert die Abscheideleistung des Trockenfilters 1, das vorteilhaft mit Hilfe von Filterschläuchen aus Teflon aufgebaut ist, während mit Hilfe der Aktivkohle Dioxine, Furane und Schwermetalle adsorbiert werden können. Die sich im Boden des Trockenfilters 1 ansammelnden, abgeschiedenen Feststoffe werden über eine Austragsschnecke 28 zur Weiterverarbeitung ausgetragen. Um das Gemisch an Aktivkohle und Kalkhydrat vorteilhaft ausnützen zu können, kann ein Teil dieser Feststoffe in einem Kreislauf wieder dem Abgasstrom zugeführt werden.

Das vor der Trockenreinigung auf bespielsweise 150 bis 240° C abgekühlte Rauchgas wird nach seiner Trockenreinigung im Trockenfilter 1 in einem dem Rauchgaswäscher 2 vorgelagerten, ein Venturirohr umfassenden Einspritzkühler 29 adiabat auf eine Temperatur unter 80° C abgekühlt, wobei die eingespritzte Kühlflüssigkeit über die Leitung 30 dem Flüssigkeitskreislauf 6 des Rauchgaswaschers 2 entnommen wird. Übersteigt der dem Rauchgaswäscher 2 zugeführte Rauchgasstrom eine vorgegebene obere Grenztemperatur von beispielsweise 90° C, was über einen Temperaturfühler 31 festgestellt wird, so kann das für die Rauchgasförderung dem Rauchgaswäscher 2 nachgeschaltete Sauggebläse 32 über eine Regeleinrichtung 33 abgeschaltet werden, die den Antriebsmotor 34 für das Sauggebläse 32 über ein Stellglied 35 ansteuert. In gleicher Weise kann das Sauggebläse 32 abgeschaltet werden, wenn die Rauchgastemperatur innerhalb des Rauchgaswäschers 2 einen vorgegebenen Grenzwert übersteigt.

Das auf eine Temperatur unterhalb des Taupunktes abgekühlte Rauchgas wird innerhalb des Rauchgaswäschers 2 in herkömmlicher Weise durch Einleiten einer Waschflüssigkeit über die Zuleitung 4 einer Naßreinigung unterworfen, wobei die das sich bildende Kondensat mit den absorbierten Schadstoffen bzw. Reaktionsprodukten aufnehmende Waschflüssigkeit im Flüssigkeitskreislauf 6 in der bereits beschriebenen Art und Weise geführt wird. Vor dem Gasaustritt aus dem Rauchgaswäscher 2 ist ein Tropfenabscheider vorgesehen, der ein Mitreißen von feinen Flüssigkeitströpfchen mit dem Rauchgasstrom verhindert. Das naß vorgereinigte Rauchgas wird über die Verbindungsleitung 36 dem nachgeschalteten Rauchgaswäscher 3 zugeführt, in dem die Endreinigung in ähnlicher Weise stattfindet. Während im Rauchgaswäscher 2 der aus dem Flüssigkeitskreislauf 6 ausgeschiedene Flüssigkeitsanteil durch den aus dem Flüssigkeitskreislauf des Rauchgaswäschers 3 ausgeschiedenen Flüssigkeitsanteil ersetzt wird, wird dieser Flüssigkeitsanteil durch Frischwasser ersetzt, das über die Speiseleitung 37 in den Rauchgaswäscher 3 eingesprüht wird. Nach einer entsprechenden Tropfenabscheidung wird das gereinigte Rauchgas über die Leitung 38 einem Abgaskamin 39 zugeführt, wobei in die Leitung 38 ein Schalldämpfer 40 gegebenenfalls mit einer Heizung 41 eingeschaltet werden kann, um eine Wasserdampfkondensation beim Austritt der Rauchgase aus dem Kamin 39 zu unterbinden.

Wie dem Blockschaltbild ohne weiteres entnommen werden kann, wird durch das Zuführen der aus der Naßreinigung ausgeschiedenen Flüssigkeitsanteile in die heißen Rauchgase und durch das nachfolgende Trockenreinigen der auf eine Temperatur oberhalb des Taupunktes abgekühlten Rauchgase ein zu entsorgender Waschflüssigkeitsanteil vermieden, was den Aufwand für solche Reinigungsanlagen erheblich herabsetzt und eine größere Umweltverträglichkeit mit sich bringt.

Wird in das Trockenfilter beispielsweise eine Mischung von 95 Gew. % Weißkalkhydrat und 5 % Herdofenkoks eingeblasen, können organische Schadstoffe, wie Dioxine, Furane, polychlorierte Biphenyle sowie deren Abbauprodukte ebenso adsorptiv entfernt werden, wie gasförmiges Quecksilber und Cadmium. Außerdem werden saure Schadstoffe, wie Chlorwasserstoff, Schwefeldioxid und Fluorwasserstoff abgeschieden. Dies bedeutet, daß die nachgeschalteten Stufen der Naßreinigung mit Staub und Aerosolen in einer Menge kleiner als 1 mg/m³, mit Dioxinen und Furanen in einer Menge kleiner als 0,1 ng/m³ sowie mit Quecksilber und Cadmium in einer Menge kleiner als 50 µg/m³ belastet werden. Damit erübrigt sich an sich die Notwendigkeit, eine der beiden Naßreinigungsstufen zur Quecksilberabscheidung sauer zu fahren. Die dann alkalisch betriebenen Rauchgaswäscher erlauben eine Reduzierung der Stickoxide um ca. 50 %. Außerdem wird eine beachtliche Reduktion der sauren Schadstoffe, wie Chlorwasserstoff, Schwefeldioxid und Fluorwasserstoff, erreicht. Die gereinigten Rauchgase wiesen einen Staubgehalt kleiner als 1 mg/m³, einen Gehalt an Chlorwasserstoff kleiner 5 mg/m³, einen Gehalt an Schwefeldioxid kleiner als 20 mg/m³, einen Quecksilbergehalt kleiner als 25 µg/m³, einen Cadmiumgehalt kleiner als 25 µg/m³, einen Gehalt an Fluorwasserstoff kleiner als 30 µg/m³ und einen Gehalt an Dioxinen und Furanen kleiner als 0,05 ng/m³ auf.

## Patentansprüche

1. Verfahren zum Reinigen eines Rauchgasstromes mit Hilfe einer Waschflüssigkeit, die in wenigstens einer Stufe in einem Kreislauf in den heißen Rauchgasstrom eingespritzt, mit dem sich bildenden Kondensat aus dem Rauchgasstrom abgeschieden und dem Rauchgasstrom wieder zugeführt wird, während ein Teil der Flüssigkeit aus dem Flüssigkeitskreislauf ausgeschieden und im Rauchgasstrom vor seiner Naßreinigung verdampft wird, dadurch gekennzeichnet, daß die aus dem Flüssigkeitskreislauf ausgeschiedene Flüssigkeit dem heißen Rauchgasstrom unmittelbar zugeführt und unter einer Abkühlung des Rauchgasstromes auf eine Temperatur oberhalb des Taupunktes verdampft wird und daß in den Rauchgasstrom ein Adsorptionsmittel eingeblasen wird, bevor der Rauchgsstrom ein der Naßreinigung vorgeschaltetes Trockenfilter durchströmt, in dem die anfallenden Schadstoffe adsorbiert und abgeschieden werden.

2. Verfahren nach Anspruch 1, dadurch gekennzeichnet, daß der Rauchgasstrom in zwei Stufen mit Hilfe je einer im Kreislauf geführten Waschflüssigkeit gereinigt wird, wobei die aus dem Kreislauf der nachgeordneten Stufe abgezogene Flüssigkeit dem Flüssigkeitskreislauf der vorgeordneten Stufe zugeführt wird, und daß die aus dem Flüssigkeitskreislauf der vorgeordneten Stufe abgezogene Flüssigkeit im heißen Rauchgasstrom verdampft wird.

3. Verfahren nach Anspruch 1 oder 2, dadurch gekennzeichnet, daß in den Rauchgasstrom vor dem Trockenfilter Kalkhydrat und Aktivkohle als Hilfs- bzw. Adsorptionsmittel eingeblasen werden.

## Claims

1. A process for scrubbing a stream of flue gas by means of a washing liquid which is injected into the hot flue gas stream in a circuit in at least one stage, is separated from the flue gas stream together with the condensate forming, and then re-fed to the flue gas stream, while some of the liquid is separated from the liquid circuit and is evaporated in the wet gas stream before its wet scrubbing, characterised in that the liquid separated from the liquid circuit is fed directly to the hot flue gas stream and, with cooling of the flue gas stream, is evaporated to a temperature above the dew point and in that after evaporation of the washing liquid an adsorbent is injected into the flue gas stream before the latter flows through a dry filter which precedes the wet scrubbing stage and in which the noxious substances occurring are adsorbed and separated.

2. A process according to claim 1, characterised in that the flue gas stream is scrubbed in two stages each by means of a washing liquid circulating in the circuit, the liquid withdrawn from the circuit of the downstream stage being fed to the liquid circuit of the preceding stage, and in that the liquid withdrawn from the liquid circuit of the preceding stage is evaporated in the heat flue gas stream.

3. A process according to claim 1 or 2, characterised in that hydrate of lime as active carbon are injected as adjuvant and adsorbent into the flue gas stream before the dry filter.

## Revendications

1. Procédé de purification d'un flux de gaz de fumée a l'aide d'un liquide laveur, qui est injecté en au moins une étape dans un circuit, dans le flux de gaz de fumée chaud, est séparé du flux de gaz de fumée avec le condensat se constituant et est amené de nouveau au flux de gaz de fumée, tandis qu'une partie du liquide est séparée du circuit de liquide et est évaporée dans le flux de gaz de fumée, avant son épuration par voie humide, caractérisé en ce que le liquide séparé du circuit de liquide est amené directement au flux de gaz de fumée chaud et est évaporé, ceci étant accompagné d'un refroidissement du flux de gaz de fumée, à une température supérieure à celle du point de rosée, et en ce que, après évaporation du liquide laveur, un agent adsorbant est insufflé dans le flux de gaz de fumée avant que le flux de gaz de fumée traverse un filtre sec mis en circuit en amont du processus d'épuration par voie humide, filtre sec dans lequel les substances nocives apparaissant sont adsorbées et séparées.

2. Procédé selon la revendication 1, caractérisé en ce que le flux de gaz de fumée est épuré en deux étapes, chaque fois à l'aide d'un liquide laveur guidé dans un circuit, le liquide ayant été extrait du circuit de liquide disposé en aval étant amené au circuit de liquide de liquide disposé en amont, et en ce que le liquide, extrait du circuit de liquide de l'étape disposée en amont, est évaporé dans le courant de gaz de fumée chaud.

3. Procédé selon la revendication 1 ou 2, caractérisé en ce que de la chaux hydratée et du charbon actif sont insufflés dans le courant de gaz de fumée, en amont du filtre sec, à titre d'agent auxiliaire respectivement d'agent d'adsorption.
